(19) Europäisches Patentamt / European Patent Office / Office européen des brevets

(11) EP 3 302 972 B1

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(21) Anmeldenummer: **16728835.6**

(22) Anmeldetag: **27.05.2016**

(51) Int Cl.:
***B32B 27/30*** *(2006.01)* ***C08J 5/18*** *(2006.01)*
***C08L 27/06*** *(2006.01)* ***B29C 43/24*** *(2006.01)*
***B29D 7/01*** *(2006.01)*

(86) Internationale Anmeldenummer:
**PCT/EP2016/000881**

(87) Internationale Veröffentlichungsnummer:
**WO 2016/192846 (08.12.2016 Gazette 2016/49)**

(54) **FOLIE MIT HOLZARTIGEM ERSCHEINUNGSBILD**
FILM WITH A WOOD-LIKE APPEARANCE
FILM AVEC UN ASPECT PROCHE DU BOIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2015 DE 102015006878**

(43) Veröffentlichungstag der Anmeldung:
**11.04.2018 Patentblatt 2018/15**

(73) Patentinhaber: **Klöckner Pentaplast GmbH**
**56412 Heiligenroth (DE)**

(72) Erfinder:
- **REUTER, Cedric**
  **50674 Köln (DE)**
- **FASEL, Adrian**
  **56459 Guckheim (DE)**
- **JÜRGENS, Sascha**
  **65558 Eppenrod (DE)**
- **BELUKHICHEV, Evgeny**
  **St. Petersburg (RU)**
- **KOHLERT, Christian**
  **56414 Oberahr (DE)**

(74) Vertreter: **Plate, Jürgen**
**Plate Schweitzer Zounek**
**Patentanwälte**
**Rheingaustrasse 196**
**65203 Wiesbaden (DE)**

(56) Entgegenhaltungen:
**EP-A2- 0 073 046** **WO-A1-2011/018182**
**WO-A1-2011/100995** **DE-U1-202010 017 534**
**DE-U1-202013 007 232** **DE-U1-202015 003 154**

- **CRESPO J E ET AL: "Study of the mechanical and morphological properties of plasticized PVC composites containing rice husk fillers", JOURNAL OF REINFORCED PLASTICS AND COMPOSITES, TECHNOMIC PUBLISHING, US, Bd. 27, Nr. 3, 3. Oktober 2007 (2007-10-03), Seiten 229-243, XP002596003, ISSN: 0731-6844, DOI: 10.1177/0731684407079479 [gefunden am 2007-12-03]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 302 972 B1

**Beschreibung**

Die Erfindung betrifft eine Folie aus einem Werkstoff, der bezogen auf sein Gesamtgewicht aus 40 bis 85 Gew.-% Vinylchloridpolymerisat, 10 bis 60 Gew.-% Reisschalenpulver, Erdnussschalenpulver oder einer Mischung aus Reis- und Erdnussschalenpulver, 0 bis 30 Gew.-% eines oder mehrerer anorganischer Füllstoffe und 5 bis 30 Gew.-% eines oder mehrerer Additive besteht.

Im Weiteren betrifft die Erfindung ein Verfahren zur Herstellung einer Folie umfassend die Schritte

(a) Bereitstellen eines Werkstoffs, der bezogen auf sein Gesamtgewicht aus 40 bis 85 Gew.-% Vinylchloridpolymerisat, 10 bis 60 Gew.-% Reisschalenpulver, Erdnussschalenpulver oder einer Mischung aus Reis- und Erdnussschalenpulver, 0 bis 30 Gew.-% eines oder mehrerer anorganischer Füllstoffe und 5 bis 30 Gew.-% eines oder mehrerer Additive besteht;

(b) Plastifizieren des Werkstoffs in einem Gelieraggregat, wobei der Werkstoff auf eine Temperatur von 160 bis 190 °C erwärmt wird;

(c) Formen des in Schritt (b) plastifizierten Werkstoffs zu einer Folie mit einer Breite von 0,1 bis 6 m, einer Länge von 2 bis 10000 m und einer Dicke d von 180 bis 1000 μm.

Zudem umfasst die Erfindung Artikel, wie Schalen, Becher und Teller, die thermogeformt sind aus einer einlagigen oder mit Kaschierfolie ausgerüsteten Folie aus einem Werkstoff, der bezogen auf sein Gesamtgewicht aus 40 bis 85 Gew.-% Vinylchloridpolymerisat, 10 bis 60 Gew.-% Reisschalenpulver, Erdnussschalenpulver oder einer Mischung aus Reis- und Erdnussschalenpulver, 0 bis 30 Gew.-% eines oder mehrerer anorganischer Füllstoffe und 5 bis 30 Gew.-% eines oder mehrerer Additive besteht.

Der Begriff "Vinylchloridpolymerisat" bezeichnet Vinylchlorid-Homopolymerisate, Vinylchlorid-Copolymerisate sowie Mischungen der vorstehenden Polymerisate. Insbesondere umfasst der Begriff "Vinylchloridpolymerisat"

- durch Homopolymerisation von Vinylchlorid erzeugte Polyvinylchloride (PVC), und
- Vinylchlorid-Copolymerisate, die durch Polymerisation von Vinylchlorid mit einem oder mehreren Comonomeren, wie Ethylen, Propylen oder Vinaylacetat gebildet werden.

Der Begriff "Folie" umfasst hier und im Folgenden vereinzelte Stücke einer Folie sowie industriell hergestellte Folienbahnen mit Längen von mehreren Hundert bis zu einigen Tausend Metern.

Die erfindungsgemäße Folie wird durch Plastifizieren und anschließendes Kalandrieren einer Zusammensetzung aus Vinylchloridpolymerisat, Reisschalenpulver, Erdnussschalenpulver oder einer Mischung aus Reis- und Erdnussschalenpulver und diversen Additiven - im Folgenden als Filler-Plastic-Composite bzw. "FPC" bezeichnet - hergestellt und kann inline und/oder offline weiterverarbeitet werden. Insbesondere eignet sich die Folie zum Thermoformen von Warenverpackungen mit komplexer Geometrie.

Im Stand der Technik sind Formkörper aus Wood-Plastic-Composite bzw. "WPC" bekannt. Die bekannten Formkörper aus WPC werden durch Extrusion hergestellt und haben eine Dicke von ≥ 1,5 mm. In Einzefällen sind für die Untersuchung mechanischer Eigenschaften, wie beispielsweise Schlagzugzähigkeit, kleinformatige WPC-Presslinge oder Schnitte von WPC-Extrudaten mit einer Dicke im Bereich von 0,8 bis 1,5 mm präpariert worden.

Demgegenüber sind größere, gewerblich und technisch anwendbare Folien aus WPC mit einer Dicke von ≤ 1 mm und Abmessungen von etwa 1 m bis zu einigen Tausend Metern im Stand der Technik nicht bekannt.

Dementsprechend hat die vorliegende Erfindung die Aufgabe, großformatige, gewerblich und technisch anwendbare Folien auf Basis von holzähnlichem Filler-Plastic-Composite bzw. FPC bereit zu stellen.

Diese Aufgabe wird gelöst durch eine Folie aus einem Werkstoff, der bezogen auf sein Gesamtgewicht aus 40 bis 85 Gew.-% Vinylchloridpolymerisat, 10 bis 60 Gew.-% Reisschalenpulver, Erdnussschalenpulver oder einer Mischung aus Reis- und Erdnussschalenpulver, 0 bis 30 Gew.-% eines oder mehrerer anorganischer Füllstoffe und 5 bis 30 Gew.-% eines oder mehrerer Additive besteht, wobei die Folie eine Breite von 0,1 bis 6 m, eine Länge von 10 bis 10000 m und eine Dicke von 180 bis 1000 μm hat.

Zweckmäßige Ausführungsformen der erfindungsgemäßen Folie sind dadurch gekennzeichnet, dass:

- die Folie eine Dicke von 180 bis 300 μm, von 200 bis 400 μm, von 300 bis 500 μm, von 400 bis 600 μm, von 500 bis 700 μm, von 600 bis 800 μm, von 700 bis 900 μm oder von 800 bis 1000 μm hat;
- die Folie eine Länge von 100 bis 10000 m hat;
- eine erste Oberfläche der Folie einen arithmetischen Mittenrauwert Ra von 3 bis 20 μm und vorzugsweise von 3

bis 10 μm hat;

- eine zweite Oberfläche der Folie einen arithmetischen Mittenrauwert Ra von 3 bis 50 μm und vorzugsweise von 3 bis 20 μm hat;
- mindestens eine Oberfläche der Folie mit einer Prägung ausgestattet ist;
- die Folie eine Zugfestigkeit von 10 bis 20 $N/mm^2$ hat;
- die Folie eine Schlagzugzähigkeit von 42 bis 50 $KJ/m^2$ hat;
- die Folie eine Bruchdehnung von 1,6 bis 2,2 % hat;
- die Folie eine Dichte von 1,34 bis 1,42 $g/cm^3$ hat;
- die anorganischen Füllstoffe gewählt sind aus Kreide, Talk, Glimmer, Tonerde, Kaolin, Silikaten und Titanoxid;
- die Additive gewählt sind aus Verarbeitungshilfsmitteln, thermischen Stabilisatoren, Gleitmitteln, polymeren Modifikatoren, Farbstoffen- und pigmenten, Fungiziden, UV-Stabilisatoren, Brandschutzmitteln und Duftstoffen;
- der Werkstoff, bezogen auf sein Gesamtgewicht 1 bis 6 Gew.-% eines oder mehrerer Gleitmittel, gewählt aus Wachsen, Fetten, Paraffinen, epoxidiertem Sojaöl und Polymerisaten auf Basis von Acrylatestern enthält;
- der Werkstoff bezogen auf sein Gesamtgewicht 3 bis 12 Gew.-% eines oder mehrerer polymerer Modifikatoren, gewählt aus Polymerisaten auf Basis von Acrylat, Butyl-Methacrylat, Methacrylat-Butyl-Styrol, Methylmethacrylat-Butadien-Styrol und chloriertem Polyethylen enthält;
- der Werkstoff bei einer Temperatur von 190 °C einen Fließexponent n von 0,05 bis 0,36 aufweist;
- das Pulver aus Reis- und/oder Erdnussschalen eine Teilchengröße von 10 bis 250 μm hat;
- das Pulver aus Reis- und/oder Erdnussschalen Silangruppen mit der Strukturformel I und/oder II

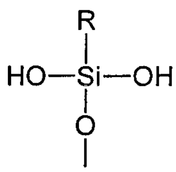 (I)

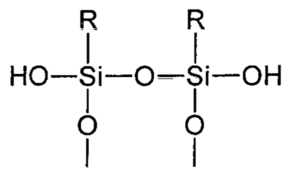 (II)

umfasst, wobei R eine Gruppe, gewählt aus $NH_2(CH_2)_3$ und $(CH_3CH_2)_2$ ist;

- das Pulver aus Reis- und/oder Erdnussschalen acetyliert ist mit einer Gewichtszunahme von 9 bis 25 %, bezogen auf das Gewicht des Pulvers vor der Acetylierung; und/oder
- auf mindestens eine Oberfläche der Folie eine Kaschierfolie laminiert ist, wobei die Kaschierfolie aus einem Werkstoff besteht, der bezogen auf sein Gesamtgewicht, 70 bis 98 Gew.-% eines Polymers umfasst, das gewählt ist aus Polyethylen und Polyester.

Im Weiteren hat die Erfindung die Aufgabe, ein Verfahren zur Herstellung von großformatigen, gewerblich und technisch anwendbaren Folien auf Basis von FPC zu schaffen.

Diese Aufgabe wird gelöst durch ein Verfahren umfassend die Schritte

(a) Bereitstellen eines Werkstoffs, der bezogen auf sein Gesamtgewicht aus 40 bis 85 Gew.-% Vinylchloridpolymerisat, 10 bis 60 Gew.-% Reisschalenpulver, Erdnussschalenpulver oder einer Mischung aus Reis- und Erdnussschalenpulver, 0 bis 30 Gew.-% eines oder mehrerer anorganischer Füllstoffe und 5 bis 30 Gew.-% eines oder mehrerer Additive besteht;

(b) Plastifizieren des Werkstoffs in einem Gelieraggregat, wobei der Werkstoff auf eine Temperatur von 160 bis 190 °C erwärmt wird;

(c) Formen des in Schritt (b) plastifizierten Werkstoffs zu einer Folie mit einer Breite von 0,1 bis 6 m, einer Länge von 2 bis 10000 m und einer Dicke d von 180 bis 1000 μm;
wobei

- der in Schritt (a) bereitgestellte Werkstoff bei einer Temperatur von 190 °C einen Fließexponent n von 0,05 bis 0,36 aufweist; und
- der plastifizierte Werkstoff in Schritt (c) kalandriert wird auf einem Walzenkalander, wobei der Werkstoff durch einen formgebenden Walzenspalt tritt, die beiden den formgebenden Walzenspalt bildenden Walzen unabhängig voneinander eine Oberflächentemperatur von 150 bis 220 °C haben, mit einer Umfangsgeschwindigkeit von 20 bis 80 m/min rotieren und das Verhältnis der Umfangsgeschwindigkeiten der beiden Walzen 1,0 bis 1,2 beträgt.

Zweckmäßige Ausführungsformen des erfindungsgemäßen Verfahrens sind dadurch gekennzeichnet, dass:

- der in Schritt (a) bereitgestellte Werkstoff bei einer Temperatur von 190 °C einen Fließexponent n von 0,1 bis 0,36 oder von 0,15 bis 0,36 aufweist;

- der plastifizierte Werkstoff in Schritt (c) kalandriert wird auf einem Walzenkalander, wobei der Werkstoff durch einen formgebenden Walzenspalt tritt und eine Vorlage mit einer Höhe von 5 bis 30 mm bildet;

- der plastifizierte Werkstoff in Schritt (c) kalandriert wird auf einem Walzenkalander, wobei der Werkstoff durch einen formgebenden Walzenspalt tritt und eine Vorlage mit einer Höhe von 5 bis 20 mm bildet;

- der plastifizierte Werkstoff in Schritt (c) kalandriert wird auf einem Walzenkalander, wobei der Werkstoff durch einen formgebenden Walzenspalt tritt und eine Vorlage mit einer Höhe von 10 bis 30 mm bildet;

- der plastifizierte Werkstoff in Schritt (c) kalandriert wird auf einem Walzenkalander, wobei der Werkstoff durch einen formgebenden Walzenspalt tritt und eine Vorlage mit einer Höhe von 10 bis 20 mm bildet;

- der plastifizierte Werkstoff in Schritt (c) kalandriert wird auf einem Walzenkalander, wobei der Werkstoff durch einen formgebenden Walzenspalt der Höhe h tritt mit

$$-0{,}0299 \cdot n^2 + 0{,}0133 \cdot d^2 - 0{,}02 \cdot n \cdot d + 0{,}0262 \cdot n + 0{,}786 \cdot d - 0{,}0042 \leq h \leq 0{,}0258 \cdot n^2 + 0{,}0459 \cdot d^2 - 0{,}0667 \cdot n \cdot d + 0{,}0106 \cdot n + 0{,}8182 \cdot d - 0{,}0053 ,$$

  wobei n der Fließexponent des Werkstoffs bei einer Temperatur von 190 °C ist, d die Dicke der Folie bezeichnet und h und d in der Einheit mm angegeben sind;

- der plastifizierte Werkstoff in Schritt (c) kalandriert wird auf einem Walzenkalander, wobei der Werkstoff durch einen formgebenden Walzenspalt der Höhe h tritt mit

$$-0{,}0169 \cdot n^2 + 0{,}0175 \cdot d^2 - 0{,}0021 \cdot n \cdot d + 0{,}0232 \cdot n + 0{,}7916 \cdot d - 0{,}0045 \leq h \leq 0{,}0258 \cdot n^2 + 0{,}0459 \cdot d^2 - 0{,}0667 \cdot n \cdot d + 0{,}0106 \cdot n + 0{,}8182 \cdot d - 0{,}0053 ,$$

  wobei n der Fließexponent des Werkstoffs bei einer Temperatur von 190 °C ist, d die Dicke der Folie bezeichnet und h und d in der Einheit mm angegeben sind;

- der plastifizierte Werkstoff in Schritt (c) kalandriert wird auf einem Walzenkalander, wobei der Werkstoff durch einen formgebenden Walzenspalt der Höhe h tritt mit

$$-0{,}0299 \cdot n^2 + 0{,}0133 \cdot d^2 - 0{,}02 \cdot n \cdot d + 0{,}0262 \cdot n + 0{,}786 \cdot d - 0{,}0042 \leq h \leq 0{,}0079 \cdot n^2 + 0{,}028 \cdot d^2 - 0{,}0326 \cdot n \cdot d + 0{,}0167 \cdot n + 0{,}8037 \cdot d - 0{,}0049 ,$$

  wobei n der Fließexponent des Werkstoffs bei einer Temperatur von 190 °C ist, d die Dicke der Folie bezeichnet und h und d in der Einheit mm angegeben sind;

- der plastifizierte Werkstoff in Schritt (c) kalandriert wird auf einem Walzenkalander, wobei der Werkstoff durch einen formgebenden Walzenspalt der Höhe h tritt mit

$$-0{,}0169 \cdot n^2 + 0{,}0175 \cdot d^2 - 0{,}0021 \cdot n \cdot d + 0{,}0232 \cdot n + 0{,}7916 \cdot d - 0{,}0045 \leq h \leq 0{,}0079 \cdot n^2 + 0{,}028 \cdot d^2 - 0{,}0326 \cdot n \cdot d + 0{,}0167 \cdot n + 0{,}8037 \cdot d - 0{,}0049 ,$$

wobei n der Fließexponent des Werkstoffs bei einer Temperatur von 190 °C ist, d die Dicke der Folie bezeichnet und h und d in der Einheit mm angegeben sind;

- die Oberflächentemperaturen Ta und Tb der beiden den formgebenden Walzenspalt bildenden Walzen die Beziehung 10 °C $\leq$ Ta - Tb $\leq$ 40 °C erfüllen, wobei Ta die Oberflächentemperatur der ersten Walze in Laufrichtung der Folie und Tb die Oberflächentemperatur der zweiten Walze in Laufrichtung der Folie bezeichnet;

- die Oberflächentemperaturen Ta und Tb der beiden den formgebenden Walzenspalt bildenden Walzen die Beziehung 20 °C $\leq$ Ta - Tb $\leq$ 40 °C erfüllen, wobei Ta die Oberflächentemperatur der ersten Walze in Laufrichtung der Folie und Tb die Oberflächentemperatur der zweiten Walze in Laufrichtung der Folie bezeichnet;

- die Oberflächentemperaturen Ta und Tb der beiden den formgebenden Walzenspalt bildenden Walzen die Beziehung 30 °C $\leq$ Ta - Tb $\leq$ 40 °C erfüllen, wobei Ta die Oberflächentemperatur der ersten Walze in Laufrichtung der Folie und Tb die Oberflächentemperatur der zweiten Walze in Laufrichtung der Folie bezeichnet;

- die beiden den formgebenden Walzenspalt bildenden Walzen unabhängig voneinander eine Oberflächentemperatur von 150 bis 200 °C oder von 170 bis 220 °C haben;

- die in Schritt (c) geformte Folie mittels einer oder mehrerer Abzugwalzen von dem Walzenkalander abgezogen wird, wobei die Umfangsgeschwindigkeit einer in Laufrichtung der Folie ersten Abzugwalze das 1,005-fache bis 1,1-fache der Umfangsgeschwindigkeit der in Laufrichtung der Folie zweiten Walze des formgebenden Walzenspaltes beträgt;

- die in Schritt (c) geformte Folie mittels einer oder mehrerer Abzugwalzen von dem Walzenkalander abgezogen wird, wobei die Umfangsgeschwindigkeit einer in Laufrichtung der Folie ersten Abzugwalze das 1,005-fache bis 1,05-fache der Umfangsgeschwindigkeit der in Laufrichtung der Folie zweiten Walze des formgebenden Walzenspaltes beträgt;

- die in Schritt (c) geformte Folie mittels zwei oder mehr Abzugwalzen von dem Walzenkalander abgezogen wird, wobei die Umfangsgeschwindigkeit einer in Laufrichtung der Folie ersten Abzugwalze das 1,005-fache bis 1,1-fache der Umfangsgeschwindigkeit einer in Laufrichtung der Folie nachgeordneten Abzugwalze beträgt;

- die in Schritt (c) geformte Folie mittels zwei oder mehr Abzugwalzen von dem Walzenkalander abgezogen wird, wobei die Umfangsgeschwindigkeit einer in Laufrichtung der Folie ersten Abzugwalze das 1,005-fache bis 1,05-fache der Umfangsgeschwindigkeit einer in Laufrichtung der Folie nachgeordneten Abzugwalze beträgt;

- die beiden den formgebenden Walzenspalt bildenden Walzen unabhängig voneinander mit einer Umfangsgeschwindigkeit von 30 bis 38 m/min, 36 bis 44 m/min oder 42 bis 50 m/min rotieren;

- das Verhältnis der Umfangsgeschwindigkeiten der beiden den formgebenden Walzenspalt bildenden Walzen 1,0 bis 1,05 , 1,025 bis 1,075 , 1,05 bis 1,1 , 1,075 bis 1,125 , 1,1 bis 1,15 , 1,125 bis 1,175 oder 1,15 bis 1,2 beträgt;

- der Walzenkalander eine oder mehrere Prägewalzen umfasst und mindestens eine Oberfläche der in Schritt (c) geformten Folie mittels der Prägewalze geprägt wird; und/oder

- auf eine Oberfläche der in Schritt (c) geformten Folie eine Kaschierfolie laminiert wird, wobei die Kaschierfolie aus einem Werkstoff besteht, der bezogen auf sein Gesamtgewicht, 70 bis 98 Gew.-% eines Polymers umfasst, das gewählt ist aus Polyethylen und Polyester.

Sämtliche Gewichtsangaben sind auf das Gesamtgewicht des erfindungsgemäßen FPC-Werkstoffs bezogen, wobei das Gesamtgewicht des FPC-Werkstoffs 100 Gew.-% entspricht. Das Gesamtgewicht des FPC-Werkstoffs ergibt sich durch Summation der Gewichte aller in dem FPC-Werkstoff enthaltenen Komponenten, wie beispielsweise PVC und Reispulver.

Dementsprechend beträgt die Summe der Gewichtsanteile aller in dem FPC-Werkstoff enthaltenen Komponenten immer 100 Gew.-%, unabhängig von den im Rahmen der Erfindung vorgesehenen Unter- und Obergrenzen der Gewichtsanteile einzelner Komponenten. Vielmehr werden die Gewichtsanteile einzelner Komponenten innerhalb der jeweiligen Unter- und Obergrenzen derart gewählt, dass die Summe der Gewichtsanteile aller in dem FPC-Werkstoff enthaltenen Komponenten stets 100 Gew.-% entspricht.

Zur Verbesserung der Fließfähigkeit und der Thermoformbarkeit des erfindungsgemäßen FPC-Werkstoffs und

der daraus hergestellten Folie werden gegebenenfalls Vinylchlorid-Copolymere eingesetzt in Mengen von 5 bis über 50 Gew.-%, bezogen auf das Gesamtgewicht des FPC-Werkstoffs.

Die Gewichtsanteile einzelner, aus Verarbeitungshilfsmitteln, thermischen Stabilisatoren, Gleitmitteln, polymeren Modifikatoren, Farbpigmenten, Fungiziden und Duftstoffen gewählter Additive liegen je nach Anforderung zwischen 0,1 bis 30 Gew.-%. Als polymere Modifikatoren werden Polymerisate aus Acrylnitril-Butadien-Styrol, Methylmethacrylat-Butadien-Styrol, Methylmethacrylat-Acrylnitril-Butadien-Styrol, Methylmethacrylat, chloriertes Polyethylen, Polymethylmethacrylat und Ethylen-Vinylacetat als Additive zur Erhöhung der Schlagzugzähigkeit in einer Menge von 1 bis 20 Gew.-%, bezogen auf das Gesamtgewicht des FPC-Werkstoffs, eingesetzt. Der erfindungsgemäße FPC-Werkstoff enthält zudem übliche Gleitmittel, wie Fettsäuren, Fettalkohole, Fettsäureamide, Metallseifen, Ester von Fettsäuren mit ein- oder mehrwertigen Alkoholen, Ester von Dicarbonsäuren mit ein- oder mehrwertigen Alkoholen, Ester von Fettsäuren und Dicarbonsäuren mit mehrwertigen Alkoholen, sogenannte Mischester oder Komplexester, Ester von Phthalsäure mit ein- oder mehrwertigen Alkoholen oder natürliche oder synthetische Wachse. Die Menge an Gleitmitteln beträgt 0,1 bis 6 Gew.-%, bezogen auf das Gesamtgewicht des FPC-Werkstoffs. Als thermische Stabilisatoren sind organische Zinnstabilisatoren, insbesondere Zinncarboxylate, Zinnmercaptide, Tetramethylzinn und Zinnthioglykolate vorgesehen. Des Weiteren werden Metall-Stabilisatoren auf Basis von Calcium, Zink, und sonstige metallfreie organische Stabilisatoren und anorganische Stabilisatoren wie beispielsweise Chlorfänger auf Basis von Dihydrotalcit eingesetzt. Der Anteil an thermischen Stabilisatoren beträgt in der Regel 0,3 bis 5 Gew.-%, bezogen auf das Gesamtgewicht des FPC-Werkstoffs.

Der erfindungsgemäße FPC-Werkstoff enthält, bezogen auf sein Gesamtgewicht 10 bis 30 Gew.-%, 20 bis 40 Gew.-%, 30 bis 50 Gew.-% oder 40 bis 60 Gew.-% eines Pulvers aus Reis- und/oder Erdnussschalen. Im Rahmen der vorliegenden Erfindung bezeichnet der Begriff "Pulver" ein Material das als schüttfähiges Pulver oder in Form von in einer Matrix dispergierten Partikeln oder Agglomeraten vorliegt. Erfindungsgemäß haben die Pulverkörner, dispergierten Partikel oder Agglomerate einen Äquivalentdurchmesser im Bereich von 10 bis 250 $\mu$m, 10 bis 130 $\mu$m, 70 bis 190 $\mu$m, 130 bis 250 $\mu$m, 10 bis 70 $\mu$m, 40 bis 100 $\mu$m, 70 bis 130 $\mu$m, 100 bis 160 $\mu$m, 130 bis 190 $\mu$m, 160 bis 220 $\mu$m oder 190 bis 250 $\mu$m.

Der Begriff "Äquivalentdurchmesser" bezeichnet den Durchmesser eines kugelförmigen Partikels gleicher stofflicher Zusammensetzung, das je nach dem verwendeten Messverfahren die gleiche Projektionsfläche (Elektronenmikroskop) oder gleiche Lichtstreuung wie das untersuchte Partikel aufweist.

In einer vorteilhaften Ausführungsform des erfindungsgemäßen Verfahrens hat die zweite der den formgebenden Walzenspalt bildenden Walzen eine vergleichsweise niedrige Oberflächentemperatur im Bereich von 150 bis 180 °C. Eine derartig niedrige Oberflächentemperatur vermindert die zur Ablösung der Folie von der zweiten Walze des formgebenden Walzenspalts erforderliche Kraft bzw. Zugspannung.

Vorzugsweise wird zur Ablösung bzw. Entnahme der Folie von dem Walzenkalander eine Abzugvorrichtung mit einer, zwei oder mehreren Abzugwalzen eingesetzt, wobei eine erste Abzugwalze mit einer Umfangsgeschwindigkeit rotiert, die 0,5 bis 10 % höher ist als die Umfangsgeschwindigkeit der zweiten Walze des formgebenden Walzenspalts. Dementsprechend wird die Folie in Laufrichtung auf der Strecke zwischen dem Walzenkalander und der Abzugvorrichtung um 0,5 bis 10 % gedehnt.

In einer besonders vorteilhaften Ausführungsform des erfindungsgemäßen Verfahrens rotiert eine erste Abzugwalze mit einer Umfangsgeschwindigkeit, die 0,5 bis 10 % höher ist als die Umfangsgeschwindigkeit einer nachgeordneten Abzugwalze. Dementsprechend wird die Folie in Laufrichtung auf der Strecke zwischen der ersten Abzugwalze und der nachgeordneten Abzugwalze um 0,5 bis 10 % gestaucht.

Die Erfindung wird nachfolgend anhand von Figuren und Beispielen näher erläutert. Es zeigen

| | |
|---|---|
| Fig. 1, 2 | Schnittansichten einer erfindungsgemäßen einlagigen und zweilagigen Folie; |
| Fig. 3 | ein Blockschema einer Kalandervorrichtung zur Herstellung einer einlagigen Folie; |
| Fig. 4, 5 | schematische Teilansichten von Kalandervorrichtungen; und |
| Fig. 6 | eine Schnittansicht eines formgebenden Walzenspaltes einer Kalandervorrichtung. |

Fig. 1 und 2 zeigen eine schematische Schnittansicht einer erfindungsgemäßen einlagigen Folie 1 aus FPC-Werkstoff, respektive einer mit einer Kaschierfolie 2 beschichteten Folie 1 aus FPC-Werkstoff. Die Kaschierfolie 2 besteht aus einem Werkstoff, der bezogen auf sein Gesamtgewicht, 70 bis 98 Gew.-% eines Polymers umfasst, das gewählt ist aus Polyethylen und Polyester.

Fig. 3 zeigt in schematischer Weise eine industrieübliche Kalandervorrichtung mit einem Gelieraggregat, einem Walzenkalander, Temper- und gegebenenfalls Prägewalzen sowie einer Wickelstation. Dem Gelieraggregat wird über einen verbundenen Mischer ein pulver- oder granulatförmiger FPC-Werkstoff zugeführt. Erfindungsgemäß wird die

Zusammensetzung des dem Gelieraggregat zugeführten FPC-Werkstoffs präzise kontrolliert, um zu gewährleisten, dass die rheologischen Eigenschaften des plastifizierten Werkstoffs weitgehend konstant sind und eventuelle Schwankungen innerhalb eines engen Toleranzbereiches liegen. Für die Herstellung der erfindungsgemäßen Folie können beliebige Kalandervorrichtungen mit einer von Fig. 3 abweichenden Konfiguration eingesetzt werden, wie nachfolgend im Zusammenhang mit Fig. 4 und 5 erläutert. Insbesondere sind Kalandervorrichtungen vorgesehen, die eine oder zwei Laminierstationen umfassen.

Fig. 4 zeigt eine vereinfachte Teilansicht einer Kalandervorrichtung mit einem Gelieraggregat 11 zum Plastifizieren des erfindungsgemäßen FPC-Werkstoffs, einer Fördereinrichtung 12 und einem Walzenkalander 13. Als Gelieraggregat 11 ist ein Extruder oder Kneter vorgesehen. Geeignete und dem Fachmann bekannte Extruder und Kneter werden von verschiedenen Herstellern kommerziell angeboten. Der in dem Gelieraggregat 11 plastifizierte FPC-Werkstoff 6 wird mittels der Fördereinrichtung 12 auf den Walzenkalander 13 übertragen und zu einer Folie 8 geformt. Der in dem Walzenkalander 13 befindliche FPC-Werkstoff ist in Fig. 4 mit der Ziffer 7 bezeichnet. Der Walzenkalander 13 umfasst zwei bis acht, vorzugsweise vier Kalanderwalzen (14, 15, 16, 17) sowie eine oder mehrere, in Fig. 4 nicht gezeigte Präge- und Kühlwalzen. Optional ist die Kalandervorrichtung mit einer oder mehreren, in Fig. 4 nicht gezeigten Laminierstationen ausgerüstet. Im Weiteren umfasst die Kalandervorrichtung eine, in Fig. 4 nicht gezeigte Wickelstation. Die Anordnung der vier Kalanderwalzen (14, 15, 16, 17) des in Fig. 4 gezeigten Walzenkalanders 13 wird als "invertierte L-Form" bezeichnet. Die Achsen der Kalanderwalzen (14, 15, 16, 17) sind im Wesentlichen parallel zueinander angeordnet. Die Kalanderwalzen (14, 15, 16, 17) sind angetrieben und rotieren um ihre Längsachsen, wobei die Drehrichtung von jeweils zwei benachbarten Walzen 14 und 15, 14 und 16, 16 und 17 einander entgegengesetzt ist.

Jede der Kalanderwalzen 14, 15, 16 und 17 ist mit einer Temperiervorrichtung verbunden und kann unabhängig von den anderen Kalanderwalzen gekühlt oder beheizt werden. Die Temperierung der Kalanderwalzen (14, 15, 16, 17) erfolgt mittels eines Fluids, insbesondere mittels Wasser oder Öl. Das temperierte Fluid wird jeder der Kalanderwalzen 14, 15, 16 und 17 über Durchführungen in der Lagerachse zugeführt und entnommen.

In dem Walzenkalander 13 durchläuft der plastifizierte FPC-Werkstoff 7 einen oder mehrere, von der Mantelfläche benachbarter Walzen 14 und 15, 14 und 16, 16 und 17 begrenzte Walzenspalte. Die Dicke der aus dem FPC-Werkstoff geformten Folie 8 ist durch den engsten, sogenannten "formgebenden" Walzenspalt 10 bestimmt. Vorzugsweise wird der formgebende Walzenspalt 10 von den beiden letzten Kalanderwalzen (16, 17) des Walzenkalanders 13 gebildet. Die Durchmesser der den formgebenden Walzenspalt 10 bildenden Kalanderwalzen 16 und 17 betragen 400 bis 900 mm.

Die Position der Drehlager einer oder mehrerer der Kalanderwalzen (14, 15, 16, 17), insbesondere der den formgebenden Walzenspalt 10 bildenden Kalanderwalze 17 und/oder 16 ist mithilfe von hydraulischen oder elektrischen Stellgliedern mit einer Genauigkeit von wenigen Mikrometern einstellbar. Dementsprechend kann die Weite des formgebenden Walzenspaltes 10 in präziser Weise an die prozesstechnischen Erfordernisse angepasst werden. Im Folgenden wird die Weite des formgebenden Walzenspaltes mit dem fachüblichen Terminus "Höhe des formgebenden Walzenspaltes" bezeichnet.

Fig. 5 zeigt eine Teilansicht einer Kalandervorrichtung, die sich von der in Fig. 4 gezeigten Vorrichtung lediglich durch die Konfiguration des Walzenkalanders 13' unterscheidet. Im Übrigen haben die Bezugszeichen der Fig. 5 die gleiche Bedeutung, wie vorstehend im Zusammenhang mit Fig. 4 beschrieben. Die Konfiguration des in Fig. 5 gezeigten Walzenkalanders 13' wird in Fachkreisen als "Z-Form" bezeichnet.

Neben den in Fig. 4 und 5 gezeigten Walzenkalandern 13 (invertierte L-Form) und 13' (Z-Form) sind im Rahmen der Erfindung alternative Konfigurationen mit zwei bis acht, vorzugsweise vier Kalanderwalzen, beispielsweise in I-Form, S-Form und L-Form, vorgesehen.

Die Eigenschaften der erfindungsgemäßen Folie aus FPC-Werkstoff werden praktisch ausschließlich durch die Betriebsparameter der beiden, den formgebenden Walzenspalt bildenden Kalanderwalzen bestimmt.

Fig. 6 zeigt eine schematische Schnittansicht eines von zwei Kalanderwalzen 16 und 17 gebildeten formgebenden Walzenspaltes 10. Der Walzenspalt 10 ist durch die Mantelflächen der gegensinnig rotierenden Kalanderwalzen 16 und 17 begrenzt, wobei der minimale Abstand zwischen den Mantelflächen der Kalanderwalzen 16 und 17 durch das Bezugszeichen "h" beziehungsweise als Höhe des formgebenden Walzenspaltes bezeichnet wird. Die in Fig. 6 nicht gezeigten Drehlager der Kalanderwalze 16 und/oder 17 sind in einer oder zwei Raumrichtungen, beispielweise vertikal und/oder horizontal, über einen Stellweg von einigen Millimetern mit einer Genauigkeit von wenigen Mikrometern verfahrbar. Dementsprechend ist die Höhe h des formgebenden Walzenspaltes präzise einstellbar. Die Umfangsgeschwindigkeiten der Kalanderwalze 16 und 17 sind durch die Bezugszeichen "$v_1$", respektive "$v_2$" bezeichnet, wobei die Umfangsgeschwindigkeit der Kalanderwalze 17 größer oder gleich der Umfangsgeschwindigkeit der Kalanderwalze 16 ist, d.h. es gilt $v_1 \leq v_2$ .

Im Weiteren ist in Fig. 6 der dem formgebenden Walzenspalt 10 zugeführte plastifizierte FPC-Werkstoff 7 und die daraus geformte Folie 8 mit der Dicke "d" dargestellt. Die Dicke d und die Breite b der Folie 8 ist eine Funktion der dem Walzenspalt 10 pro Zeiteinheit zugeführten Menge bzw. Masse an plastifiziertem FPC-Werkstoff 7 und der Umfangsgeschwindigkeiten $v_1$ und $v_2$ der Kalanderwalzen 16, respektive 17. Aufgrund der Masseerhaltung ist die pro

Zeiteinheit hergestellte Masse an Folie 8 identisch zu der pro Zeiteinheit zugeführten Masse an plastifiziertem FPC-Werkstoff 7. Vorzugsweise wird der plastifizierte FPC-Werkstoff 7 dem formgebenden Walzenspalt 10 in Form einer Bahn mit Dicke $d_1$ und Breite $b_1$ zugeführt. Aufgrund der Masseerhaltung gilt dann $v_1 \times d_1 \times b_1 = v_2 \times d \times b$ . Das Verhältnis der Breite b der Folie 8 zu der Breite $b_1$ der dem Walzenspalt zugeführten Bahn aus plastifiziertem FPC-Werkstoff 7 liegt vorzugsweise im Bereich $1{,}0 \cdot b_1 \leq b \leq 1{,}2 \cdot b_1$ und besonders bevorzugt im Bereich $1{,}0 \cdot b_1 \leq b \leq 1{,}1 \cdot b_1$ , d.h. dass die dem formgebenden Walzenspalt 10 zugeführte Bahn aus plastifiziertem FPC-Werkstoff 7 um bis zu 20 %, respektive um bis zu 10 % verbreitert wird. Die Länge der pro Zeiteinheit hergestellten Folie 8 entspricht der Umfangsgeschwindigkeit $v_2$ und wird auch als Produktionsgeschwindigkeit bezeichnet. Die Höhe h des formgebenden Walzenspaltes 10 wird in Abhängigkeit von der gewählten Dicke d der Folie 8 derart eingestellt, dass die Relation $h \leq d$ erfüllt ist.

Im Weiteren zeigt Fig. 6 schematisch die sogenannte Vorlage 7', die sich, bezogen auf die Förderrichtung des plastifizierten FPC-Werkstoffs 7, vor dem formgebenden Walzenspalt 10 bildet. Die Vorlage 7' wird in Fachkreisen auch als Knet bezeichnet. Die Vorlage 7' entsteht, weil ein Teil des zugeführten FPC-Werkstoffes 7 vor dem formgebenden Walzenspalt 10 umgelenkt und nach Durchlaufen einer oder mehrerer Wirbelzonen von der Mantelfläche der Kalanderwalze 17 durch den formgebenden Walzenspalt 10 transportiert wird. Das Volumen der Vorlage 7' hängt in maßgeblicher Weise von der Höhe h des formgebenden Walzenspaltes 10 ab. Mit abnehmender Höhe h des formgebenden Walzenspaltes 10 nimmt das Volumen der Vorlage 7' zu und umgekehrt. In anschaulicher Betrachtung bewirkt der formgebende Walzenspalt 10 eine Stauung des plastifizierten FPC-Werkstoffes 7, die mit abnehmender Höhe h anwächst. Für h = d hat die Vorlage 7' ein minimales Volumen. Die Höhe der Vorlage 7' bzw. des Knets 7' ist in Fig. 6 mit dem Bezugszeichen "$h_1$" bezeichnet.

Für die Eigenschaften einer aus erfindungsgemäßem FPC-Werkstoff hergestellten Folie 8 mit Dicke d sind die Umfangsgeschwindigkeiten $v_1$, $v_2$ und die Temperaturen der formgebenden Kalanderwalzen 16 und 17 sowie die Höhe h des Walzenspaltes 10 maßgeblich. Hierbei sind die vorstehenden Kalanderparameter mit den rheologischen Eigenschaften des jeweils eingesetzten FPC-Werkstoffs, insbesondere dessen Fließexponent n abzustimmen. Prinzipiell beinflußt auch der Durchmesser der formgebenden Kalanderwalzen 16 und 17 die Eigenschaften der hergestellten Folie 8. Allerdings ist für die im Rahmen der vorliegenden Erfindung vorgesehenen Kalanderwalzen mit einem industrieüblichen Durchmesser im Bereich von 400 bis 900 mm der Einfluß der Walzendurchmesser vernachlässigbar.

Im Rahmen der vorliegenden Erfindung bezeichnen die Begriffe "erste Walze" oder "vorgeordnete Walze" beziehungsweise "zweite Walze" oder "nachgeordnete Walze" die auf die Laufrichtung der Folie in der Kalandervorrichtung bezogene Anordnung der betreffenden Walze relativ zu einer anderen Walze. Beispielsweise werden unter Bezugnahme auf die Figuren 4, 5 und 6 die beiden, den formgebenden Walzenspalt 10 bildenden Walzen 16 und 17 als "erste" Walze 16, respektive "zweite" Walze 17 bezeichnet. Analoges gilt für eine erfindungsgemäß vorgesehene Abzugvorrichtung mit zwei oder mehr Abzugwalzen, wobei die Begriffe "erste Abzugwalze" oder "vorgeordnete Abzugwalze" beziehungsweise "zweite Abzugwalze" oder "nachgeordnete Abzugwalze" die auf die Laufrichtung der Folie in der Kalandervorrichtung bezogene Anordnung der betreffenden Abzugwalze relativ zu einer anderen Abzugwalze bezeichnen.

Die zur Charakterisierung des erfindungsgemäßen FPC-Werkstoffs und der hieraus hergestellten Folien eingesetzten Messverfahren werden nachfolgend beschrieben.

Die Zugfestigkeit und Bruchdehnung der Folien werden gemäß DIN EN ISO 527:2012, die Schlagzugzähigkeit nach DIN EN ISO 8256:2005, die Dichte nach DIN EN ISO 1183:2005 und die Dicke nach DIN 53370:2006 bestimmt.

Die Bestimmung des Fließexponenten n des FPC-Werkstoffes erfolgt gemäß DIN EN ISO 1133 bei einer Temperatur von 190 °C unter Verwendung einer Standarddüse mit Durchmesser 2,095 mm und Länge 8 mm. Es werden 5 Messungen mit Auflagegewichten von 2,16 kg, 5,0 kg, 10,0 kg, 15,0 kg und 21,6 kg entsprechend Schubspannungen $\tau$ von $1{,}965 \times 10^4$ Pa, $4{,}548 \times 10^4$ Pa, $9{,}096 \times 10^4$ Pa, $1{,}364 \times 10^5$ Pa und $1{,}965 \times 10^5$ Pa durchgeführt und die jeweilige Schmelze-Volumenfließrate Q bestimmt. Die zugehörige (scheinbare) Schergeschwindigkeit $\dot{\gamma}_a$ wird anhand der Schmelze-Volumenfließrate Q berechnet gemäß der Beziehung

$$\dot{\gamma}_a = \frac{4Q}{\pi R^3}$$

wobei R = 1,0475 mm ist. Dementsprechend gilt $\dot{\gamma}_a = 1{,}108 \cdot Q\,mm^{-3}$.

Aus der Schergeschwindigkeit $\dot{\gamma}_a$ und der zugehörigen Schubspannung $\tau$ wird die Viskosität $\eta = \tau / \dot{\gamma}_a$ berechnet. Gemäß dem Potenzgesetz von Ostwald-de-Waele ist die Viskosität $\eta$ mit der Schergeschwindigkeit $\dot{\gamma}_a$ durch folgende Beziehung verknüpft

$$\eta = K \cdot \dot{\gamma}_a^{\,n-1}$$

worin K den Konsistenzfaktor und n den Fließexponenten bezeichnet. Hieraus ergibt sich in doppelt logarithmischer Darstellung ein linearer Zusammenhang

$$\log(\eta) = \log(K) + (n-1) \cdot \log(\dot{\gamma}_a)$$

der es gestattet, den Konsistenzfaktor K und den Fließexponenten n anhand der Messergebnisse für die Schmelze-Volumenfließraten für die vorstehend genannten fünf Auflagegewichte bzw. Schubspannungen durch lineare Regression zu bestimmen.

Der arithmetische Mittenrauwert Ra der Oberflächen der erfindungsgemäßen Folie wird mittels eines taktilen Profilometers bestimmt, beispielsweise mit einem Instrument des Typs "Hommel-Etamic W20" der Firma Jenoptik. Die Messung erfolgt gemäß den Normen DIN EN ISO 4287:2010 und DIN EN ISO 16610:2013. Hierbei wird eine Tastspitze mit einem Radius von kleiner 5 μm verwendet. Bei jeder Rauheitsmessung wird eine Taststrecke Lt = 5 × lr zuzüglich Vor- und Nachlaufstrecke von insgesamt größer 15 mm abgetastet. Als Grenzwellenlänge $\lambda_C$ des Tiefpassfilters für die Trennung von Rauheit und Welligkeit gemäß DIN EN ISO 16610:2013 wird ein Wert von $\lambda_C$ = 2,5 mm eingesetzt; dementsprechend hat die Länge der fünf Einzelmessstrecken lr den Wert lr = 2,5 mm (lr = $\lambda_C$).

Die Abmessungen von mikroskaligen Partikeln oder Agglomeraten werden erfindungsgemäß mittels eines Rasterelektronenmiskroskops oder Transmissionselektronenmikroskops und einer Bildanalysesoftware, wie beispielsweise ImageJ (http://imagej.nih.gov/ij) bestimmt. Hierbei werden anhand digitalisierter elektronenmikroskopischer Aufnahmen mindestens 100, vorzugsweise mindestens 1000 Partikel bzw. Agglomerate mithilfe der Bildanalysesoftware digital vermessen. Aufgrund der hohen lateralen Auflösung von Elektronenmikroskopen des Standes der Technik, die je nach Einstellung der Elektronenoptik und der Strahlparameter im Bereich von einigen Ångström bis zu 10 nm liegt, kann der Äquivalentdurchmesser der Partikel oder Agglomerate mit hoher Zuverlässigkeit ermittelt werden. Alternativ oder begleitend werden die Abmessungen mikroskaliger Partikel oder Agglomerate mittels Lichtstreuung gemessen. Ein hierfür geeignetes Messgerät für Partikelgrößen von 0,01 bis 5000 μm wird unter anderem von Horiba Ltd. (Kyoto, Japan) unter der Produktbezeichnung LA-300 kommerziell angeboten.

**Patentansprüche**

1. Folie aus einem Werkstoff, der bezogen auf sein Gesamtgewicht aus 40 bis 85 Gew.-% Vinylchloridpolymerisat, 10 bis 60 Gew.-% Reisschalenpulver, Erdnussschalenpulver oder einer Mischung aus Reis- und Erdnussschalenpulver, 0 bis 30 Gew.-% eines oder mehrerer anorganischer Füllstoffe und 5 bis 30 Gew.-% eines oder mehrerer Additive besteht, **dadurch gekennzeichnet, dass** die Folie eine Breite von 0,1 bis 6 m, eine Länge von 10 bis 10000 m und eine Dicke von 180 bis 1000 μm hat.

2. Folie nach Anspruch 1, **dadurch gekennzeichnet, dass** die Folie eine Länge von 100 bis 10000 m hat.

3. Folie nach Anspruch 1 oder 2, **dadurch gekennzeichnet, dass** eine erste Oberfläche der Folie einen arithmetischen Mittenrauwert Ra von 3 bis 20 μm hat, wobei Ra nach dem Verfahren in der Beschreibung gemessen wird.

4. Folie nach einem oder mehreren der Ansprüche 1 bis 3, **dadurch gekennzeichnet, dass** eine zweite Oberfläche der Folie einen arithmetischen Mittenrauwert Ra von 3 bis 50 μm hat.

5. Folie nach einem oder mehreren der Ansprüche 1 bis 4, **dadurch gekennzeichnet, dass** mindestens eine Oberfläche der Folie mit einer Prägung ausgestattet ist.

6. Folie nach einem oder mehreren der Ansprüche 1 bis 5, **dadurch gekennzeichnet, dass** die anorganischen Füllstoffe gewählt sind aus Kreide, Talk, Glimmer, Tonerde, Kaolin, Silikaten und Titanoxid.

7. Folie nach einem oder mehreren der Ansprüche 1 bis 6, **dadurch gekennzeichnet, dass** die Additive gewählt sind aus Verarbeitungshilfsmitteln, thermischen Stabilisatoren, Gleitmitteln, polymeren Modifikatoren, Farbstoffen und -pigmenten, Fungiziden, UV-Stabilisatoren, Brandschutzmitteln und Duftstoffen.

8. Folie nach einem oder mehreren der Ansprüche 1 bis 7, **dadurch gekennzeichnet, dass** der Werkstoff bezogen auf sein Gesamtgewicht 1 bis 6 Gew.-% eines oder mehrerer Gleitmittel, gewählt aus Wachsen, Fetten, Paraffinen, epoxidiertem Sojaöl und Polymerisaten auf Basis von Acrylatestern enthält.

9. Folie nach einem oder mehreren der Ansprüche 1 bis 8, **dadurch gekennzeichnet, dass** der Werkstoff bezogen auf sein Gesamtgewicht 3 bis 12 Gew.-% eines oder mehrerer polymerer Modifikatoren, gewählt aus Polymerisaten auf Basis von Acrylat, Butyl-Methacrylat, Methacrylat-Butyl-Styrol, Methylmethacrylat-Butadien-Styrol und chloriertem Polyethylen enthält.

10. Folie nach einem oder mehreren der Ansprüche 1 bis 9, **dadurch gekennzeichnet, dass** der Werkstoff bei einer Temperatur von 190 °C einen Fließexponent n von 0,05 bis 0,36 aufweist wobei n nach dem Verfahren in der Beschreibung gemessen wird.

11. Folie nach einem oder mehreren der Ansprüche 1 bis 10, **dadurch gekennzeichnet, dass** das Pulver aus Reis- und/oder Erdnussschalen eine Teilchengröße von 10 bis 250 $\mu$m hat.

12. Folie nach einem oder mehreren der Ansprüche 1 bis 11, **dadurch gekennzeichnet, dass** das Pulver aus Reis- und/oder Erdnussschalen Silangruppen mit der Strukturformel I und/oder II

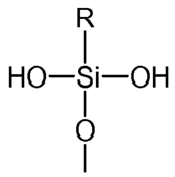 (I)

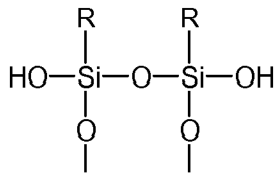 (II)

umfasst, wobei R eine Gruppe, gewählt aus $NH_2(CH_2)_3$ und $(CH_3CH_2)_2$ ist.

13. Folie nach einem oder mehreren der Ansprüche 1 bis 12, **dadurch gekennzeichnet, dass** das Pulver aus Reis- und/oder Erdnussschalen acetyliert ist mit einer Gewichtszunahme von 9 bis 25 %, bezogen auf das Gewicht des Pulvers vor der Acetylierung.

14. Folie nach einem oder mehreren der Ansprüche 1 bis 13, **dadurch gekennzeichnet, dass** auf mindestens eine Oberfläche der Folie eine Kaschierfolie laminiert ist, wobei die Kaschierfolie aus einem Werkstoff besteht, der bezogen auf sein Gesamtgewicht, 70 bis 98 Gew.-% eines Polymers umfasst, das gewählt ist aus Polyethylen und Polyester.

15. Verfahren zur Herstellung einer Folie umfassend die Schritte

**(a)** Bereitstellen eines Werkstoffs, der bezogen auf sein Gesamtgewicht aus 40 bis 85 Gew.-% Vinylchloridpolymerisat, 10 bis 60 Gew.-% Reisschalenpulver, Erdnussschalenpulver oder einer Mischung aus Reis- und Erdnussschalenpulver, 0 bis 30 Gew.-% eines oder mehrerer anorganischer Füllstoffe und 5 bis 30 Gew.-% eines oder mehrerer Additive besteht;
**(b)** Plastifizieren des Werkstoffs in einem Gelieraggregat, wobei der Werkstoff auf eine Temperatur von 160 bis 190 °C erwärmt wird;
**(c)** Formen des in Schritt (b) plastifizierten Werkstoffs zu einer Folie mit einer Breite von 0,1 bis 6 m, einer Länge von 2 bis 10000 m und einer Dicke d von 180 bis 1000 $\mu$m;
**dadurch gekennzeichnet, dass**

- der in Schritt (a) bereitgestellte Werkstoff bei einer Temperatur von 190 °C einen Fließexponent n von 0,05 bis 0,36 aufweist; und
- der plastifizierte Werkstoff in Schritt (c) kalandriert wird auf einem Walzenkalander, wobei der Werkstoff durch einen formgebenden Walzenspalt tritt und eine Vorlage mit einer Höhe von 5 bis 30 mm bildet, die beiden den formgebenden Walzenspalt bildenden Walzen unabhängig voneinander eine Oberflächentemperatur von 150 bis 220 °C haben, mit einer Umfangsgeschwindigkeit von 20 bis 80 m/min rotieren und das Verhältnis der Umfangsgeschwindigkeiten der beiden Walzen 1,0 bis 1,2 beträgt.

16. Verfahren zur Herstellung einer Folie nach Anspruch 15, **dadurch gekennzeichnet, dass** der plastifizierte Werkstoff

in Schritt (c) kalandriert wird auf einem Walzenkalander, wobei der Werkstoff durch einen formgebenden Walzenspalt tritt und eine Vorlage mit einer Höhe von 5 bis 20 mm bildet.

**17.** Verfahren zur Herstellung einer Folie nach Anspruch 15 oder 16, **dadurch gekennzeichnet, dass** die Oberflächentemperaturen Ta und Tb der beiden den formgebenden Walzenspalt bildenden Walzen die Beziehung 10 °C ≤ Ta - Tb ≤ 40 °C erfüllen, wobei Ta die Oberflächentemperatur der ersten Walze in Laufrichtung der Folie und Tb die Oberflächentemperatur der zweiten Walze in Laufrichtung der Folie bezeichnet; und/oder die in Schritt (c) geformte Folie mittels einer, zwei oder mehr Abzugwalzen von dem Walzenkalander abgezogen wird, wobei die Umfangsgeschwindigkeit einer in Laufrichtung der Folie ersten Abzugwalze das 1,005-fache bis 1,1-fache der Umfangsgeschwindigkeit der in Laufrichtung der Folie zweiten Walze des formgebenden Walzenspaltes beträgt.

## Claims

**1.** Sheet made of a material composed of, based on its total weight, from 40 to 85 % by weight of vinyl chloride polymer, from 10 to 60 % by weight of rice-husk powder, peanut-shell powder or a mixture of rice-husk and peanut-shell powder, from 0 to 30 % by weight of one or more inorganic fillers and from 5 to 30 % by weight of one or more additives, **characterized in that** the width of the sheet is from 0.1 to 6 m, its length is from 10 to 10 000 m and its thickness is from 180 to 1000 μm.

**2.** Sheet according to Claim 1, **characterized in that** the length of the sheet is from 100 to 10 000 m.

**3.** Sheet according to Claim 1 or 2, **characterized in that** the arithmetic average roughness value Ra of a first surface of the sheet is from 3 to 20 μm, where Ra is measured by the method in the description.

**4.** Sheet according to one or more of Claims 1 to 3, **characterized in that** the arithmetic average roughness value Ra of a second surface of the sheet is from 3 to 50 μm.

**5.** Sheet according to one or more of Claims 1 to 4, **characterized in that** at least one surface of the sheet has been embossed.

**6.** Sheet according to one or more of Claims 1 to 5, **characterized in that** the inorganic fillers are selected from chalk, talc, mica, alumina, kaolin, silicates and titanium oxide.

**7.** Sheet according to one or more of Claims 1 to 6, **characterized in that** the additives are selected from processing aids, heat stabilizers, lubricants, polymeric modifiers, dyes and pigments, fungicides, UV stabilizers, fire-protection agents and fragrances.

**8.** Sheet according to one or more of Claims 1 to 7, **characterized in that** the material comprises, based on its total weight, from 1 to 6 % by weight of one or more lubricants selected from waxes, fats, paraffins, epoxidized soya oil and acrylate-based polymers.

**9.** Sheet according to one or more of Claims 1 to 8, **characterized in that** the material comprises, based on its total weight, from 3 to 12 % by weight of one or more polymeric modifiers selected from acrylate-, butyl-methacrylate-, methacrylate-butyl-styrene-, methyl-methacrylate-butadiene-styrene- and chlorinated-polyethylene-based polymers.

**10.** Sheet according to one or more of Claims 1 to 9, **characterized in that** the flow exponent n of the material at a temperature of 190 °C is from 0.05 to 0.36, where n is measured by the method in the description.

**11.** Sheet according to one or more of Claims 1 to 10, **characterized in that** the particle size of the powder made of rice husks and/or of peanut shells is from 10 to 250 μm.

**12.** Sheet according to one or more of Claims 1 to 11, **characterized in that** the powder made of rice husks and/or of peanut shells comprises silane groups with the structural formula I and/or II

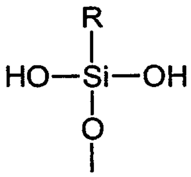 (I)

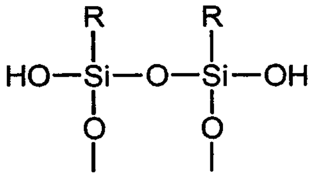 (II)

where R is a group selected from $NH_2(CH_2)_3$ and $(CH_3CH_2)_2$.

**13.** Sheet according to one or more of Claims 1 to 12, **characterized in that** the powder made of rice husks and/or of peanut shells has been acetylated with a weight increase of from 9 to 25 %, based on the weight of the powder before acetylation.

**14.** Sheet according to one or more of Claims 1 to 13, **characterized in that** a lamination sheet has been laminated onto at least one surface of the sheet, where the lamination sheet is composed of a material comprising, based on its total weight, from 70 to 98 % by weight of a polymer selected from polyethylene and polyester.

**15.** Process for the production of a sheet comprising the steps of

**(a)** provision of a material composed of, based on its total weight, from 40 to 85 % by weight of vinyl chloride polymer, from 10 to 60 % by weight of rice-husk powder, peanut-shell powder or a mixture of rice-husk and peanut-shell powder, from 0 to 30 % by weight of one or more inorganic fillers and from 5 to 30 % by weight of one or more additives;
**(b)** plastification of the material in a gelling assembly where the material is heated to a temperature of from 160 to 190 °C;
**(c)** moulding of the material plastified in step (b) to give a sheet of width from 0.1 to 6 m, length from 2 to 10 000 m and thickness d from 180 to 1000 μm;
**characterized in that**

- the flow exponent n of the material provided in step (a) at a temperature of from 190 °C is from 0.05 to 0.36; and
- in step (c) the plastified material is calendered on a roll calender, where the material passes through a shaping nip and forms an accumulation of material of height from 5 to 30 mm in advance of the nip, the surface temperature of the two rolls forming the shaping nip, mutually independently, is from 150 to 220 °C, the said rolls rotate with a peripheral velocity of from 20 to 80 m/min and the ratio of the peripheral velocities of the two rolls is from 1.0 to 1.2.

**16.** Process for the production of a sheet according to Claim 15, **characterized in that** the plastified material is calendered in step (c) on a roll calender where the material passes through a shaping nip and forms an accumulation of material of height from 5 to 20 mm.

**17.** Process for the production of a sheet according to Claim 15 or 16, **characterized in that** the surface temperatures Ta and Tb of the two rolls forming the shaping nip comply with the relationship 10 °C ≤ Ta - Tb ≤ 40 °C, where Ta is the surface temperature of the first roll in the direction of running of the sheet and Tb is the surface temperature of the second roll in the direction of running of the sheet; and/or the sheet moulded in step (c) is drawn off from the roll calender by means of one, two or more take-off rolls, where the peripheral velocity of a take-off roll that is first in the direction of running of the sheet is from 1.005 times to 1.1 times the peripheral velocity of the shaping-nip roll that is second in the direction of running of the sheet.

## Revendications

**1.** Film en un matériau qui est constitué par rapport à son poids total de 40 à 85 % en poids de polymère de chlorure de vinyle, de 10 à 60 % en poids de poudre de balle de riz, de poudre de cosse d'arachide ou d'un mélange de poudres de balle de riz et de cosse d'arachide, de 0 à 30 % en poids d'un ou plusieurs agents de charge inorganiques et de 5 à 30 % en poids d'un ou plusieurs additifs,
**caractérisé en ce que** le film a une largeur de 0,1 à 6 m, une longueur de 10 à 10000 m et une épaisseur de 180 à 1000 μm.

2. Film selon la revendication 1, **caractérisé en ce que** le film a une longueur de 100 à 10000 m.

3. Film selon la revendication 1 ou 2, **caractérisé en ce qu'**une première surface du film a une rugosité moyenne arithmétique Ra de 3 à 20 μm, dans lequel Ra est mesurée selon le procédé de la description.

4. Film selon une ou plusieurs des revendications 1 à 3, **caractérisé en ce qu'**une deuxième surface du film a une rugosité moyenne arithmétique Ra de 3 à 50 μm.

5. Film selon une ou plusieurs des revendications 1 à 4, **caractérisé en ce qu'**au moins une surface du film est dotée d'un gaufrage.

6. Film selon une ou plusieurs des revendications 1 à 5, **caractérisé en ce que** les agents de charge inorganiques sont sélectionnés à partir de la craie, du talc, du mica, de l'argile, du kaolin, des silicates et de l'oxyde de titane.

7. Film selon une ou plusieurs des revendications 1 à 6, **caractérisé en ce que** les additifs sont sélectionnés à partir des auxiliaires de traitement, des stabilisants thermiques, des lubrifiants, des modificateurs polymères, des colorants et pigments de couleur, des fongicides, des stabilisants aux UV, des agents ignifugeants et des parfums.

8. Film selon une ou plusieurs des revendications 1 à 7, **caractérisé en ce que** le matériau contient par rapport à son poids total, 1 à 6 % en poids d'un ou plusieurs lubrifiants sélectionnés à partir des cires, des graisses, des paraffines, de l'huile de soja époxydée et des polymères à base d'esters d'acrylate.

9. Film selon une ou plusieurs des revendications 1 à 8, **caractérisé en ce que** le matériau contient par rapport à son poids total, 3 à 12 % en poids d'un ou plusieurs modificateurs polymères sélectionnés à partir des polymères à base d'acrylate, de butyl-méthacrylate, de méthacrylate-butyl-styrène, de méthylméthacrylate-butadiène-styrène et de polyéthylènes chlorés.

10. Film selon une ou plusieurs des revendications 1 à 9, **caractérisé en ce que** le matériau a, à une température de 190 °C, un exposant d'écoulement n de 0,05 à 0,36, dans lequel n est mesuré selon le procédé de la description.

11. Film selon une ou plusieurs des revendications 1 à 10, **caractérisé en ce que** la poudre de balle de riz et/ou de cosse d'arachide a une taille de particule de 10 à 250 μm.

12. Film selon une ou plusieurs des revendications 1 à 11, **caractérisé en ce que** la poudre de balle de riz et/ou de cosse d'arachide comprend des groupes silane de formule développée I et/ou II

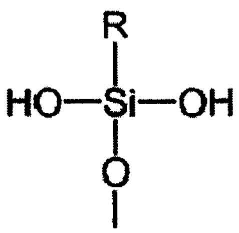
(I)

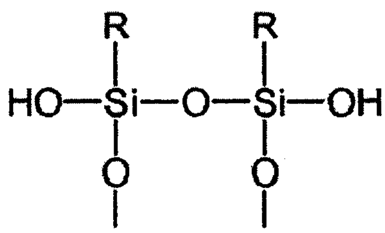
(II)

dans laquelle R est un groupe sélectionnés à partir de $NH_2(CH_2)_3$ et de $(CH_3CH_2)_2$.

13. Film selon une ou plusieurs des revendications 1 à 12, **caractérisé en ce que** la poudre de balle de riz et/ou de cosse d'arachide est acétylée, entraînant une augmentation de poids de 9 à 25 % par rapport au poids de la poudre avant l'acétylation.

14. Film selon une ou plusieurs des revendications 1 à 13, **caractérisé en ce que** sur l'au moins une surface du film est stratifié un film de pelliculage, dans lequel le film de pelliculage est constitué d'un matériau qui comprend par rapport à son poids total, 70 à 98 % en poids d'un polymère qui est sélectionnés à partir des polyéthylènes et polyesters.

15. Procédé de fabrication d'un film comprenant les étapes de

**(a)** mise à disposition d'un matériau qui est constitué par rapport à son poids total de 40 à 85 % en poids de polymère de chlorure de vinyle, de 10 à 60 % en poids de poudre de balle de riz, de poudre de cosse d'arachide ou d'un mélange de poudres de balle de riz et de cosse d'arachide, de 0 à 30 % en poids d'un ou plusieurs agents de charge inorganiques et de 5 à 30 % en poids d'un ou plusieurs additifs ;
**(b)** plastification du matériau en un agrégat de gélification, dans lequel le matériau est chauffé à une température de 160 à 190 °C ;
**(c)** mise en forme du matériau plastifié de l'étape (b) en un film ayant une largeur de 0,1 à 6 m, une longueur de 2 à 10000 m et une épaisseur d de 180 à 1000 μm ;
**caractérisé en ce que**

- le matériau mis à disposition à l'étape (a) a, à une température de 190 °C, un exposant d'écoulement n de 0,05 à 0,36 ; et
- le matériau plastifié est calandré à l'étape (c) sur une calandre à cylindres, dans lequel le matériau passe au travers d'une fente de cylindres de façonnage et forme un gabarit ayant une hauteur de 5 à 30 mm, les deux cylindres formant la fente de cylindres de façonnage ont indépendamment l'un de l'autre une température de surface de 150 à 220 °C, tournent à une vitesse périphérique de 20 à 80 m/min et le rapport des vitesses périphériques des deux cylindres est de 1,0 à 1,2.

**16.** Procédé de fabrication d'un film selon la revendication 15, **caractérisé en ce que** le matériau plastifié est calandré à l'étape (c) sur une calandre à cylindres, dans lequel le matériau passe au travers d'une fente de cylindres de façonnage et forme un gabarit ayant une hauteur de 5 à 20 mm.

**17.** Procédé de fabrication d'un film selon la revendication 15 ou 16, **caractérisé en ce que** les températures de surface Ta et Tb des deux cylindres formant la fente de cylindres de façonnage satisfont à la relation 10 °C $\leq$ Ta - Tb $\leq$ 40 °C, dans lequel Ta désigne la température de surface du premier cylindre dans le sens de circulation du film et Tb désigne la température de surface du deuxième cylindre dans le sens de circulation du film ; et/ou le film formé à l'étape (c) est déroulé au moyen d'un, deux cylindres de traction ou plus de la calandre à cylindres, dans lequel la vitesse périphérique d'un premier cylindre de déroulement dans le sens de circulation du film est de 1,005 fois à 1,1 fois la vitesse périphérique du deuxième cylindre dans le sens de circulation du film de la fente de cylindres de façonnage.

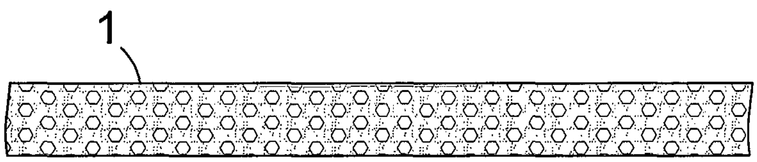


Fig. 1

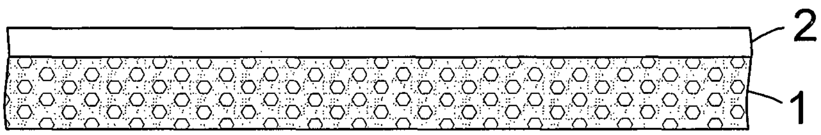


Fig. 2

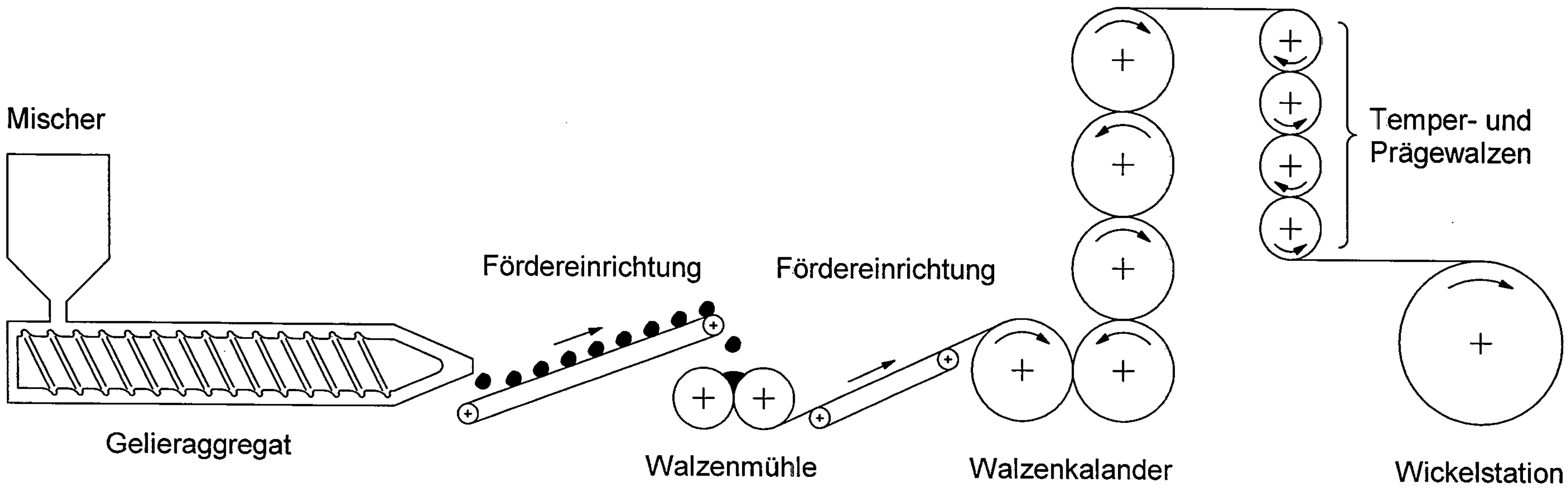
Mischer
Gelieraggregat
Fördereinrichtung
Walzenmühle
Fördereinrichtung
Walzenkalander
Temper- und Prägewalzen
Wickelstation

Fig. 3

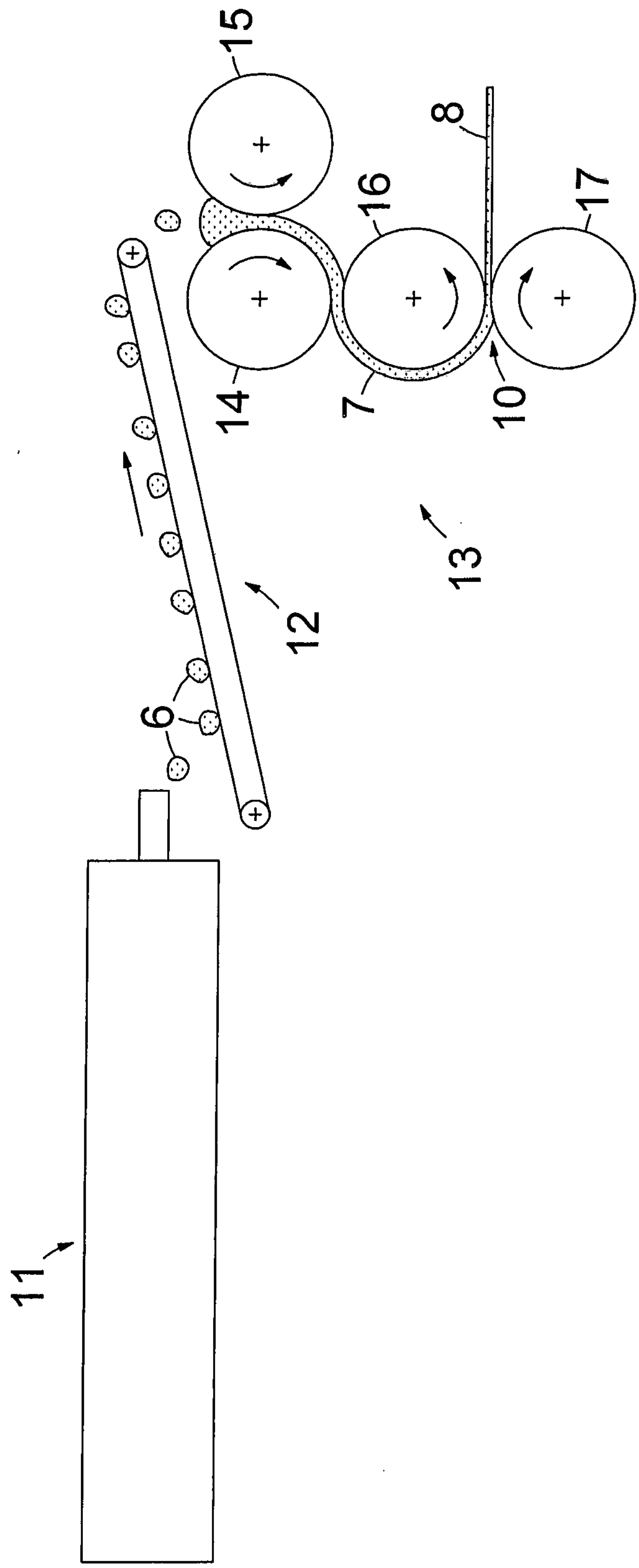


Fig. 4

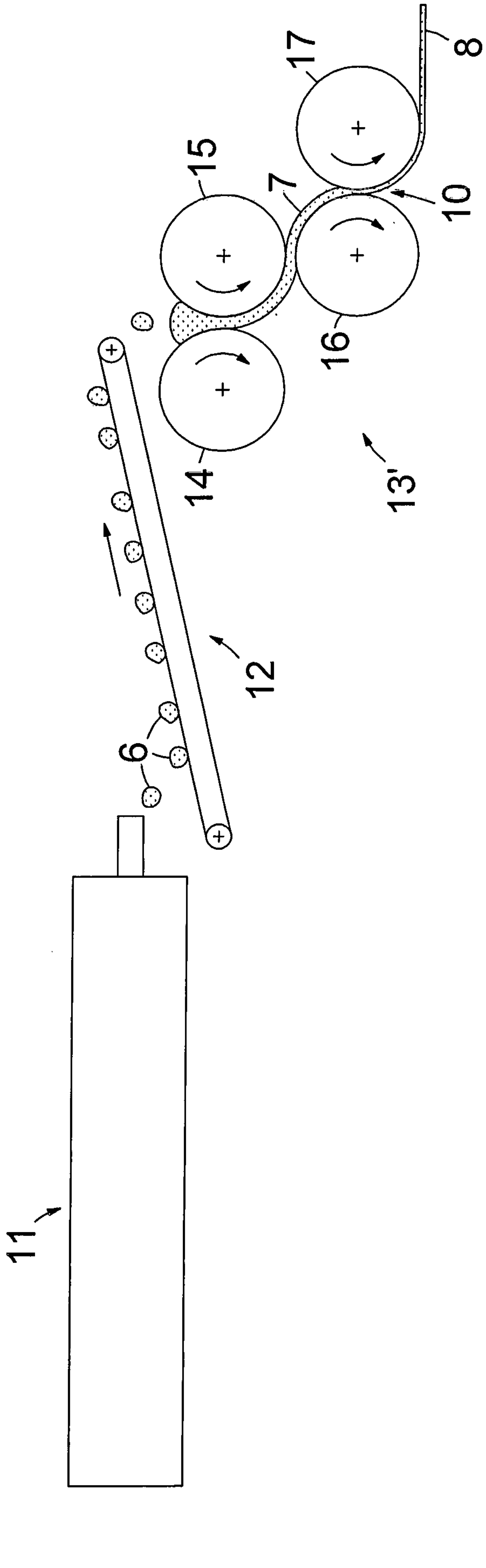


Fig. 5

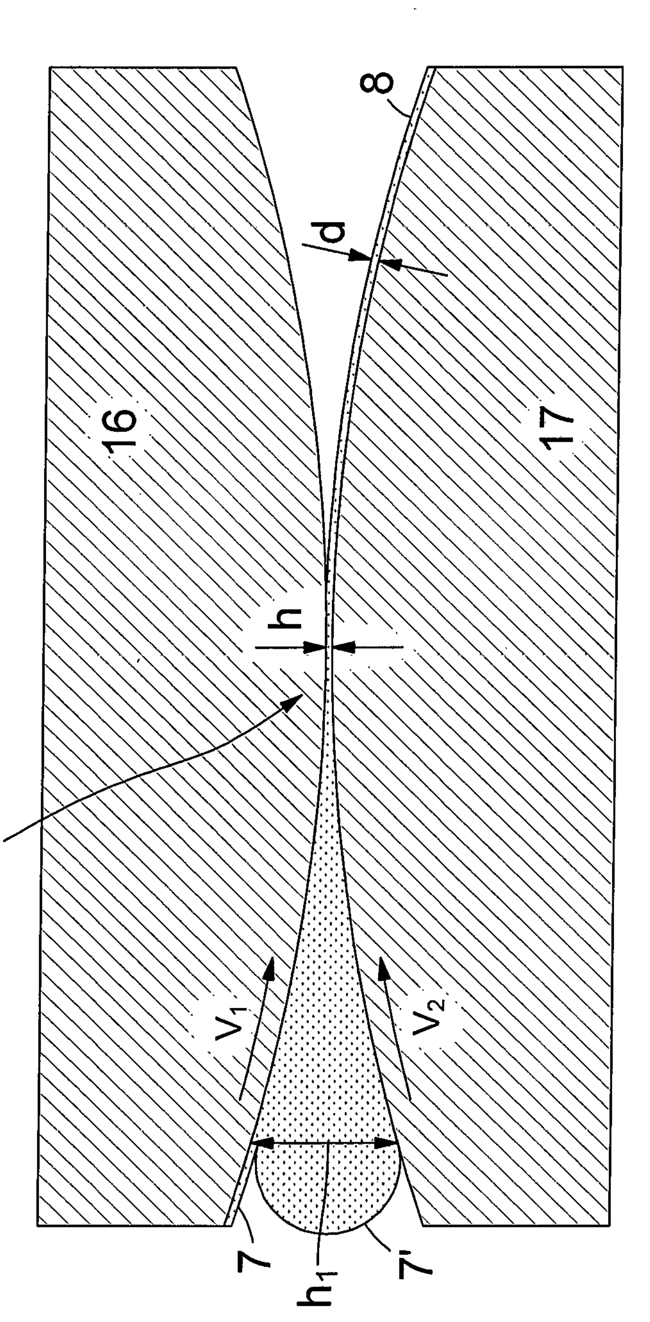


Fig. 6